# EUROPÄISCHE PATENTSCHRIFT

(11) **EP 4 459 149 B1**
(45) Veröffentlichungstag und Bekanntmachung des Hinweises auf die Patenterteilung: **18.03.2026**
(21) Anmeldenummer: 24167142.9
(22) Anmeldetag: 28.03.2024
(51) Int. Cl.: F16D 27/09

(54) **ELEKTROMAGNETISCHE KUPPLUNG UND VERFAHREN ZUM SCHLIESSEN UND ÖFFNEN EINER ELEKTROMAGNETISCHEN KUPPLUNG**
ELECTROMAGNETIC CLUTCH AND METHOD FOR OPENING AND CLOSING AN ELECTROMAGNETIC CLUTCH
EMBRAYAGE ÉLECTROMAGNÉTIQUE ET PROCÉDÉ DE FERMETURE ET D'OUVERTURE D'UN EMBRAYAGE ÉLECTROMAGNÉTIQUE

(30) Priorität: 18.04.2023 DE 102023109684
(43) Veröffentlichungstag der Anmeldung: 06.11.2024
(73) Patentinhaber: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); BUTORIN, Oleg, 86956 Schongau (DE); KUCHAREK, Sebastian, 86956 Schongau (DE); SEDLMAIR, Martin, 86956 Schongau (DE)
(74) Vertreter: Prinz & Partner mbB

(56) Entgegenhaltungen:
- DE-A1- 102017 204 113
- US-A- 2 969 134
- US-A1- 2021 190 150
- US-B2- 9 816 569

## Beschreibung

Die Erfindung betrifft eine elektromagnetische Kupplung und ein Verfahren zum Schließen und Öffnen einer elektromagnetischen Kupplung.

Der Begriff "elektromagnetischen Kupplung" soll dabei darauf abstellen, dass die Kupplung elektromagnetisch betätigt wird. Die Drehmomentübertragung bei geschlossener Kupplung kann dabei jedoch form- und/oder reibschlüssig erfolgen.

Soll temporär Drehmoment von einer Welle auf eine andere, koaxial dazu ausgerichtete Welle übertragen werden, ohne dass diese beiden Wellen dauerhaft verbunden werden, so kommen typischerweise Kupplungen zum Einsatz. Hierbei wird zwischen reibschlüssigen und formschlüssigen Kupplungen unterschieden. Die vorliegende Erfindung beschränkt sich dabei auf formschlüssige Kupplungen.

Für formschlüssige Kupplungen werden häufig verschiebliche Kupplungsmuffen eingesetzt. Diese weisen eine oder auch mehrere verschiedene Verzahnungen auf, welche in Gegenverzahnungen greifen, sodass ein Formschluss entsteht, über den Drehmoment von einer auf eine andere Welle übertragen werden kann.

Aus dem Stand der Technik sind elektromagnetische Kupplungen bekannt, bei denen die Verstellung der verschieblichen Kupplungsmuffe über eine Spule erfolgt, die eine magnetische Kraft auf die Kupplungsmuffe ausübt. Der Schaltweg, entlang dem die verschiebliche Kupplungsmuffe durch die magnetischen Kräfte verstellt werden kann, ist dabei begrenzt. Dies hängt damit zusammen, dass die magnetischen Kräfte, die auf die Kupplungsmuffe aufgebracht werden können mit zunehmender Entfernung zur Spule abnehmen. Dies bedeutet, dass die Schaltmuffe nur entlang eines gewissen Abschnitts über die magnetische Kraft der Spule verstellbar ist und somit auch die axiale Überdeckung von Verzahnung und Gegenverzahnung entsprechend begrenzt ist.

Die axiale Überdeckung der Verzahnungen ist jedoch neben der Ausgestaltung der Verzahnung selbst maßgeblich dafür verantwortlich, wie viel Drehmoment durch die Kupplung zwischen zwei Wellen maximal übertragen werden kann. Folglich ist bei einer elektromagnetischen Kupplung das übertragbare Drehmoment aufgrund des begrenzten Schaltwegs der Schaltmuffe begrenzt.

Soll der Schaltweg und damit die axiale Überdeckung der Verzahnung erhöht werden, so bringt dies zwangsläufig den Einsatz von größeren Spulen mit sich.

Nachteilig ist, dass mit dem Einsatz von größeren Spulen der Bauraumbedarf und die Materialkosten erhöht werden. Zudem geht der Einsatz von größeren Spulen auch mit einer Erhöhung des Gewichts der elektromagnetischen Kupplung einher. Dies wirkt sich insbesondere bei einem Einsatz der elektromagnetischen Kupplung in Fahrzeugen negativ aus.

Aus der US 2 969 134 A ist eine elektromagnetische Kupplung bekannt, deren erste und zweite Verzahnung schräge Flächen aufweisen, so dass die Verzahnungen zunächst aneinander vorbeigleiten und keinen Formschluss bilden, bis eine vorbestimmte Differenzgeschwindigkeit der Schaltmuffe und des Kupplungskörpers unterschritten ist. Dann kann eingekuppelt werden.

Die DE 10 2017 204 113 A1 zeigt eine Kupplungsvorrichtung mit einer elektromagnetischen Kupplung sowie einer zweiten Kupplung, die durch Änderung der Viskosität eines Wirkmediums betätigt wird. Die elektromagnetische Kupplung weist sowohl an der Schiebemuffe als auch an den beiden Kupplungsteilen Formschlusselemente, beispielsweise Innen- bzw. Außenverzahnungen, auf.

In der US 2021/0190150 A1 ist eine elektromagnetisch betätigbare Formschlusskupplung gezeigt, deren Schiebemuffe sowie deren Kupplungskörper eine Verzahnung aufweisen, wobei die Verzahnung vorzugsweise durch Zahnräder und/oder Geradverzahnungen gegeben ist. Ferner weist die Formschlusskupplung einen Verriegelungsmechanismus auf, der aus zwei Rastvorrichtungen besteht, zwischen denen eine Kugel einrasten kann.

Die US 9 816 569 B2 offenbart eine Kraftübertragungsvorrichtung, die vorzugsweise als eine elektromagnetisch betätigbare Klauenkupplung ausgebildet ist, so dass die Schaltmuffe und der Kupplungskörper jeweils eine Klauenverzahnung aufweisen.

Vor diesem Hintergrund ist es die Aufgabe der Erfindung, eine elektromagnetische Kupplung bereitzustellen, bei der eine möglichst große axiale Überdeckung der Verzahnungen trotz des begrenzten magnetischen Schaltwegs der Schaltmuffe realisiert werden kann. Dies soll erreicht werden, ohne eine größer dimensionierte Spule einzusetzen und ohne das Gewicht der elektromagnetischen Kupplung maßgeblich zu erhöhen.

Die gestellte Aufgabe wird erfindungsgemäß durch eine elektromagnetische Kupplung gelöst, mit einer Schaltmuffe, die eine erste Verzahnung aufweist, die drehfest auf einer ersten Welle angeordnet ist und linear entlang der Welle zwischen einem Ein- und Auskupplungszustand verstellbar ist, einem ersten Kupplungskörper, der eine zweite Verzahnung aufweist und der koaxial zur ersten Welle ausgerichtet ist, einem Stator, der eine erste Spule umfasst, die zur direkten oder indirekten Verstellung der Schaltmuffe linear entlang der Welle dient, wobei die erste und/oder zweite Verzahnung in Richtung zum Einkupplungszustand Hinterschnitte aufweist/-en, die derart ausgebildet ist/sind, dass eine Drehmomentübertragung zwischen der Welle und dem ersten Kupplungskörper eine Kraft auf die Schaltmuffe in Richtung Einkupplungszustand erzeugt, und wobei im Einkupplungszustand ein Formschluss durch die erste und zweite Verzahnung zwischen der Schaltmuffe und dem ersten Kupplungskörper vorliegt. Des Weiteren ist ein Anker vorgesehen, der mit der Schaltmuffe gekoppelt ist und über Bestromen der ersten und/oder zweiten Spule entlang der ersten Welle verstellbar ist, wobei der Anker und die Schaltmuffe in axialer Richtung zueinander verschiebbar gekoppelt sind. Die Verstellung des Ankers durch zumindest eine der Spulen ist durch einen Anschlag begrenzt, der an dem Kupplungskörper vorgesehen ist, um einen Kontakt mit dem Stator zu vermeiden, wobei bei einer Anlage des Ankers am Anschlag bei bestromter Spule eine magnetische Haltekraft vorliegen kann, die auf den Anker wirkt.

Der Grundgedanke der Erfindung ist es, dass die Schaltmuffe mittels der ersten Spule von dem Auskupplungszustand in den Einkupplungszustand verstellbar ist und so ein Formschluss zwischen der ersten und zweiten Verzahnung hervorgerufen wird, da bereits eine noch reduzierte axiale Überdeckung der Verzahnungen in axialer Richtung vorliegt.

Kommt es zu einer Übertragung von Drehmoment zwischen der ersten Welle und dem Kupplungskörper, so rufen die erste und/oder zweite Zahnung aufgrund der Hinterschnitte eine Kraft hervor, die auf die Schaltmuffe in Richtung des Einkupplungszustands wirkt.

Dies hat zur Folge, dass die Schaltmuffe ab einer gewissen Kraft weiter in Richtung des Einkupplungszustands bewegt wird. Hierdurch kann ein Schaltweg realisiert werden, welcher allein durch die Verstellung über die erste Spule nicht möglich wäre. Folglich wird die Schaltmuffe im Einkupplungszustand bei einer Übertragung von Drehmoment durch die mit Hinterschnitten versehene erste und/oder zweite Verzahnung hin zum Einkupplungszustand "gezogen".

Die zusätzliche Verschiebung der Schaltmuffe bei der Drehmomentübertragung geht mit einer Zunahme der axialen Überdeckung der ersten und zweiten Verzahnung einher, sodass höhere Drehmomente übertragen werden können.

Der Gesamtschaltweg der Schaltmuffe wird also in einen ersten Schaltweg, welcher mittels der Spule erfolgt, und einen zweiten Schaltweg, welcher durch die Hinterschnitte der ersten und/oder zweiten Verzahnung in Verbindung mit einem wirkenden Drehmoment hervorgerufen wird, aufgeteilt.

Diese Ausgestaltung erlaubt einen einfachen Aufbau, um höhere Schaltwege und eine größere axiale Überdeckung der Verzahnungen abbilden zu können, ohne die Dimensionierung der Spule zu ändern oder den Luftspalt zwischen Anker und Stator zu erhöhen.

Außerdem erfolgt durch eine Verstellung des Ankers mittels der ersten und/oder zweiten Spule entlang der ersten Welle auch eine Verschiebung der Schaltmuffe. Dennoch ist eine Relativbewegung zwischen dem Anker und der Schaltmuffe nicht ausgeschlossen.

Weiter kann das Material für die Schaltmuffe unabhängig von dessen magnetischen Eigenschaften gewählt und behandeln werden. So können drehmomentübertragende Bauteile beispielsweise gehärtet werden, ohne dass dabei Rücksicht auf die magnetischen Eigenschaften der Schaltmuffe genommen werden muss.

Weiter können alle drehmomentübertragenden Bauteile zudem magnetisch von dem Anker entkoppelt werden.

Ferner erlaubt diese Ausführung äußerst geringe Spaltmaße zwischen dem Anker und dem Stator, wodurch sich besonders hohe Schaltkräfte realisieren lassen.

Dadurch resultiert auch bei geringer Bestromung der Spule eine hohe magnetische Halterkraft.

Hierdurch kann die Verlustleistung beim Halten des Ankers am Anschlag durch Senken der Stromstärke deutlich reduziert werden, ohne dass der Anker sich ungewollt vom Anschlag löst.

Ein Aspekt sieht vor, dass die erste Spule zur direkten oder indirekten Verstellung der Schaltmuffe linear entlang der ersten Welle in den Einkupplungszustand dient und dass der Stator eine zweite Spule umfasst, die zur direkten oder indirekten Verstellung der Schaltmuffe linear entlang der ersten Welle entgegen des Einkupplungszustands dient. Zusätzlich oder alternativ zur zweiten Spule kann eine Federrückstellung vorgesehen sein, die auf die Schaltmuffe eine Federkraft linear entlang der ersten Welle entgegen des Einkupplungszustands aufbringt.

Darüber hinaus ist es denkbar, dass je nach Schaltrichtung beide Spulen zur Verstellung der Schaltmuffe in den Ein- und Auskupplungszustand dienen.

Weiter kann bei einer Verstellung der Schaltmuffe mittels der ersten Spule in dem Einkupplungszustand eine axiale Überdeckung zwischen der ersten und zweiten Verzahnung vorliegt und die Hinterschnitte bei einer Drehmomentübertragung die Schaltmuffe hin zum Einkupplungszustand verschieben.

Durch die zusätzliche Verschiebung der Schaltmuffe hin zum Einkupplungszustand erhöht sich entsprechend den vorherigen Erläuterungen die axiale Überdeckung der ersten und zweiten Verzahnung, die größer ist, als wenn die Schaltmuffe ausschließlich durch die Spule in den Einkupplungszustand verstellt wird.

Bevorzugt kann/können die mit Hinterschnitten versehene erste und/oder zweite Verzahnung Zähne aufweisen, deren Zahnflanken in der Draufsicht zumindest entlang eines Abschnitts des Zahns keilförmig verlaufen.

Die Keilform ermöglicht eine einfache Ausgestaltung der Hinterschnitte und gewährt dennoch ein flächiges Abstützen der Zähne der Verzahnungen aneinander, vorausgesetzt die Zahnflanken der Zähne sind aufeinander abgestimmt.

Durch eine nur abschnittsweise vorliegende Keilform der Zähne kann beispielsweise erreicht werden, dass dann, wenn sich die Schaltmuffe bei einer Drehmomentübertragung zusätzlich hin zum Einkupplungszustand bewegt und die maximale Überdeckung der Verzahnungen erreicht ist, weitere Abschnitte entlang der Zähne vorgesehen sind, die flächig auf gegenüberliegenden Flächen der Zähne der Gegenverzahnung liegen.

So können eine hohe axiale Überdeckung und gleichzeitig ein flächiges Aufliegen der Zähne der Verzahnungen erreicht werden.

Bevorzugt weisen die erste und die zweite Verzahnung Hinterschnitte auf, wobei die zulaufenden Enden der keilförmigen Abschnitte der ersten und zweiten Verzahnung in entgegengesetzte Richtung verlaufen.

Wenn beide Verzahnungen keilförmige Abschnitte aufweisen, können die Zahnflanken der Verzahnungen aufeinander abgestimmt werden, sodass ein flächiges Vorliegen der keilförmigen Abschnitte vorliegt.

Vorteilhafterweise sind der Anker und die Schaltmuffe in axialer Richtung über zumindest eine elastische Federeinheit gekoppelt, die bei axialer Relativverschiebung der Schaltmuffe und des Ankers zueinander einfedert.

Die Federeinheit erlaubt also eine Relativbewegung zwischen Schaltmuffe und Anker. Gleichzeitig federt sie ein, sodass eine Federkraft entsteht, die die Schaltmuffe und den Anker zurück in die ursprüngliche relative Positionierung wirkt.

Zudem kann zumindest eine Federeinheit so angeordnet sein, dass bei sich stirnseitig kontaktierender erster und zweiter Verzahnungen und bei noch nicht mit dem ersten Kupplungskörper gekoppelter Schaltmuffe die Federeinheit die Schaltmuffe in Richtung zum Einkupplungszustand vorspannt.

Dies bringt den zusätzlichen Vorteil mit sich, dass sobald die Verzahnungen sich relativ zueinander verdrehen, die Schaltmuffe eine Beschleunigte Bewegung hin zum ersten Kupplungskörper ausführt und die Verzahnungen ineinandergreifen.

Bevorzugt kann der Anker eine erste axiale Anlagefläche aufweisen und die Schaltmuffe eine zweite axiale Anlagefläche und die elastische Federeinheit in axialer Richtung an der ersten und zweiten axialen Anlagefläche abstützen.

Dadurch kann sich die Federeinheit gleichmäßig zwischen Anker und Schaltmuffe abstützen, sodass auch gegebenenfalls herrschende Federkräfte gleichmäßig auf die Schaltmuffe und den Anker wirken und ein Verkanten der Bauteile verhindert wird.

Der Anker kann einen radialen Steg aufweisen, auf dem die erste axiale Anlagefläche vorgesehen ist. Ein Steg bietet dabei eine besonders einfache Realisierung für eine Anlagefläche und ist zudem stabil.

Vorteilhafterweise kann auf einer axialen Seite des Stegs die erste und auf der entgegengesetzten Seite des Stegs eine zweite Federeinheit vorhanden sein, wobei zumindest eine der Federeinheiten eine Rückstellkraft bei Relativverschiebung von Anker und Schaltmuffe ausübt.

Somit ist sichergestellt, dass der Anker und die Schaltmuffe in beide axiale Richtungen über die Federeinheiten gekoppelt sind, und dass bei vorgespannten Federeinheiten und einer Relativbewegung zwischen Anker und Schaltmuffe eine Rückstellkraft durch zumindest eine Federeinheit wirkt.

Befindet sich die Schaltmuffe also im Einkupplungszustand und es wird zudem ein Drehmoment aufgebracht, so erlauben die elastischen Federeinheiten dennoch eine relative Verschiebung zwischen dem Anker und der Schaltmuffe.

Sobald die Drehmomentbeaufschlagung zurückgenommen wird oder nicht mehr vorhanden ist, bewirkt die Rückstellkräfte durch zumindest eine der Federeinheiten, dass sich die Schaltmuffe relativ zu dem Anker zurück in den Ausgangszustand bewegt.

Die Federeinheiten können in Räumen untergebracht sein, die radial innenseitig durch eine Schaltmuffenhülse und radial außenseitig durch einen Anker sowie an einer Stirnseite durch den Steg und an der entgegengesetzten Stirnseite durch ein fest mit der Schaltmuffenhülse verbundenes Zahnrad begrenzt werden, wobei das Zahnrad die erste Verzahnung aufweist und im Einkupplungszustand in die am Kupplungskörper vorgesehene zweite Verzahnung eingreift.

Durch die Unterbringung der Federeinheiten in Räumen ist sichergestellt, dass diese zu allen Seiten geführt sind. Weiter wird hierdurch sichergestellt, dass, wenn sich die Schaltmuffe relativ zum Anker in eine der beiden axialen Richtungen bewegt, stets zumindest eine der Federeinheiten komprimiert wird und eine Rückstellkraft ausübt.

Vorteilhafterweise ist die zumindest eine Federeinheit zumindest ein Wellenring oder eine Tellerfeder oder umfasst ein Paket aus diesen.

Sowohl Tellerfedern als auch Wellenfedern sind dabei besonders geeignet, da sie entlang des gesamten Umfangs gleichmäßig auf die beiden axialen Anlageflächen wirken, wenn sie vorgespannt sind oder komprimiert werden.

Weiter kann zumindest eine Federeinheit so angeordnet sein, dass bei noch nicht mit dem Kupplungskörper gekoppelter Schaltmuffe diese Federeinheit vorgespannt ist, um eine Federkraft auf die Schaltmuffe in Richtung zum Einkupplungszustand auszuüben. Gegebenenfalls kann die Federeinheit, wenn die Verzahnungen Kopf an Kopf anschlagen, die Schaltmuffe in Richtung zum Einkupplungszustand vorspannen. Die Verschiebekraft wird vom Anker über die Federeinheit auf die Schaltmuffe übertragen und die Federeinheit federt ein, wenn ein genügend großer Widerstand von der Schaltmuffe kommt, so dass die Federeinheit daraufhin permanent gegen die Schaltmuffe in Richtung Einkupplungszustand drückt. Bei anfänglichem Anschlag der Verzahnungen Kopf an Kopf drückt die Federeinheit die Schaltmuffe in die Verzahnung am Kupplungskörper, sobald eine Zahnlücke erreicht ist.

Die zumindest eine Federeinheit kann so angeordnet sein, dass bei mit dem ersten Kupplungskörper gekoppelter Schaltmuffe diese Federeinheit vorgespannt ist, um eine Federkraft auf die Schaltmuffe in Richtung Auskupplungszustand auszuüben. Das heißt, die Schaltmuffe wird in Richtung Auskupplungszustand vorspannt. Die Federkraft unterstützt also permanent den Auskupplungsvorgang, auch wenn der Anker noch nicht bewegt wurde.

Zudem kann eine Federrastierung vorgesehen sein, die dazu dient, eine Haltekraft auf die Schaltmuffe im Ein- und/oder Auskupplungszustand auszuüben.

Hierdurch wird ermöglicht, dass die Spulen beispielsweise nicht aktiviert werden müssen, wenn der Anker mitsamt Schaltmuffe im Auskupplungszustand gehalten werden soll.

Weiter ermöglicht dies auch, dass, wenn der Anker mitsamt Schaltmuffe hin zum Einkupplungszustand bewegt wird, die Federrastierung auf die Schaltmuffe eine Haltekraft im Einkupplungszustand ausübt, sobald der Anker den Anschlag erreicht hat, oder sobald die Schaltmuffe zusätzlich durch eine Drehmomentbelastung weiter hin zum Einkupplungszustand bewegt wird.

Gemäß einer Option kann ein zweiter Kupplungskörper vorgesehen sein, der koaxial zur ersten Welle ausgerichtet ist und auf der den ersten Kupplungskörper entgegengesetzten axialen Seite der Schaltmuffe vorgesehen ist, und mit der Schaltmuffe über Betätigung der zweiten Spule koppelbar ist, wobei die Verzahnung des zweiten Kupplungskörpers und die zugeordnete Verzahnung der Schaltmuffe wie die Verzahnung des ersten Kupplungskörpers und deren zugeordneten Verzahnung ausgebildet sind.

Hierdurch kann die Schaltmuffe also ausgehend vom Ausgangszustand in zwei verschiedene Einkupplungszustände verschoben werden, sodass zusätzlich auch eine Drehmomentübertragung zwischen der ersten Welle und dem zweiten Kupplungskörper stattfinden kann.

Vorteilhafterweise können bei Bewegen der Schaltmuffe in den Einkupplungszustand mit dem zweiten Kupplungskörper die Federeinheiten vor und nach dem Einkuppeln in Richtung des Einkupplungszustands oder des Auskupplungszustands auf die Schaltmuffe wirken, wie dies zuvor schon erläutert wurde.

Die entsprechenden Vorteile ergeben sich aus den obigen Erläuterungen.

Die eingangs genannte Aufgabe wird auch gelöst durch ein Verfahren zum Schließen und Öffnen einer elektromagnetischen Kupplung, insbesondere einer erfindungsgemäßen elektromagnetischen Kupplung gemäß den obigen Erläuterungen, mit einem Anker und einer damit gekoppelten Schaltmuffe, die eine erste Verzahnung aufweist, drehfest auf einer ersten Welle angeordnet ist und linear entlang der ersten Welle zwischen einem Ein- und Auskupplungszustand verstellbar ist, einem ersten Kupplungskörper mit einer zweiten Verzahnung, der koaxial zur ersten Welle ausgerichtet ist, einer ersten Spule, die zur Verstellung der Schaltmuffe linear entlang der ersten Welle in den Einkupplungszustand dient, und einer zweiten Spule, die zur Verstellung der Schaltmuffe linear entlang der ersten Welle entgegen dem Einkupplungszustand dient, mit den folgenden Schritten:
a) Spannungsanlegen an die erste Spule und Erzeugen einer auf den Anker wirkenden magnetischen Kraft hin zum ersten Kupplungskörper;
b) Verschieben des Ankers und Mitnahme der Schaltmuffe durch den Anker aus einem Auskupplungszustand in Richtung des Einkupplungszustands unter Zwischenschaltung einer Federeinheit zwischen Anker und Schaltmuffe;
c) Bewegen der Schaltmuffe in den Einkupplungszustand der Schaltmuffe und Ausbilden eines Formschlusses zwischen der Schaltmuffe und dem ersten Kupplungskörper durch die erste und zweite Verzahnung, wobei die erste und zweite Verzahnung eine erste axiale Überdeckung zueinander aufweisen;
d) Übertragen eines Drehmoments zwischen dem ersten Kupplungskörper und der ersten Welle sowie Verschieben der Schaltmuffe relativ zum Anker hin zum ersten Kupplungskörper, wobei die erste und zweite Verzahnung eine zweite axiale Überdeckung zueinander aufweisen, die den Betrag der ersten übertrifft;
e) Aufheben oder Verringern des übertragenen Drehmoments zwischen dem ersten Kupplungskörper und der ersten Welle sowie Verschieben der Schaltmuffe relativ zum Anker weg vom ersten Kupplungskörper, wobei die erste und zweite Verzahnung die erste axiale Überdeckung zueinander aufweisen;
f) Aufheben oder Verringern der auf den Anker wirkenden magnetischen Kraft durch die erste Spule;
g) Spannungsanlegen an die zweite Spule und Erzeugen einer auf den Anker wirkenden magnetischen Kraft; und
h) Verschieben des Ankers und Mitnahme der Schaltmuffe durch den Anker aus einem Einkupplungszustand in den Auskupplungszustand.

Es wird also zunächst die erste Spule bestromt, sodass der Anker die Schaltmuffe aus dem Auskupplungszustand in den Einkupplungszustand verschiebt. Die Kopplung zwischen Anker und Schaltmuffe erfolgt dabei über Federeinheiten, welche vorzugsweise durch die Bewegung des Ankers vorgespannt werden, sodass mit der Verschiebung des Ankers eine praktisch direkte Verschiebung der Schaltmuffe einhergeht.

Dabei ist es möglich, dass die erste und zweite Verzahnung aufeinanderliegen und die Verzahnung der Schaltmuffe nicht direkt in die Verzahnung des Kupplungskörpers greift.

Dies hat zur Folge, dass der Anker sich aufgrund der magnetischen Kraft hin zum Kupplungskörper bewegt, während eine Bewegung der Schaltmuffe aufgrund der sich stirnseitig kontaktierenden Verzahnungen nicht möglich ist. Es findet also eine Relativbewegung zwischen Anker und Schaltmuffe statt, durch die zumindest eine der Federeinheiten komprimiert und dadurch vorgespannt wird.

Kommt es zu einer Verdrehung der Schaltmuffe relativ zum Kupplungskörper, wird die Schaltmuffe aufgrund der vorgespannten Feder beschleunigt in den Einkupplungszustand bewegen und einen Formschluss mit dem Kupplungskörper ausbilden. Die Verzahnungen weisen dabei eine erste axiale Überdeckung zueinander auf.

Dieser Formschluss erlaubt die Übertragung eines Drehmoments zwischen dem Kupplungskörper und der ersten Welle, welche zur Folge hat, dass die Schaltmuffe sich relativ zum Anker weiter hin zum Kupplungskörper bewegt und sich die axiale Überdeckung der Verzahnungen erhöht, sodass ein zusätzliches Drehmoment übertragen werden kann.

Zudem findet auch aufgrund dieser Relativbewegung zwischen Schaltmuffe und Anker eine Komprimierung in axialer Richtung von zumindest einer Federeinheit statt.

Dies führt dazu, dass die sich dabei aufbauende Rückstellkraft die Schaltmuffe relativ zum Anker zurück in die ursprüngliche Position verschiebt, sobald sich das übertragende Drehmoment zwischen der ersten Welle und dem Kupplungskörper ausreichend verringert oder aufgehoben wird.

Die Schaltmuffe befindet sich also weiter im Einkupplungszustand. Die Überdeckung der Verzahnung nimmt aber auf die ursprüngliche Überdeckung ab. Um den Anker mitsamt der Schaltmuffe zurück in den Auskupplungszustand zu bewegen, muss zunächst die durch die erste Spule wirkende magnetische Kraft verringert oder aufgehoben werden. Zudem muss die zweite Spule bestromt werden, sodass eine magnetische Kraft hin zum Auskupplungszustand wirkt, die den Anker und die Schaltmuffe axial entlang der ersten Welle verschiebt.

Die sich weiter hieraus ergebenden Vorteile sind den obigen Absätzen zu entnehmen.

Die Erfindung wird nachfolgend anhand einer Ausführungsform beschrieben, die in den beigefügten Zeichnungen dargestellt ist. In diesen zeigen:
- Figur 1 eine Schnittdarstellung einer erfindungsgemäßen elektromagnetischen Kupplung mit einer Schaltmuffe im Auskopplungszustand;
- Figur 2 eine schematische Draufsicht auf Verzahnungen der erfindungsgemäßen elektromagnetischen Kupplung nach Figur 1 mit der Schaltmuffe im Auskopplungszustand;
- Figur 3 eine Schnittdarstellung einer weiteren erfindungsgemäßen elektromagnetischen Kupplung mit einer Schaltmuffe im Auskopplungszustand gemäß einer zweiten Option;
- Figur 4 eine schematische Draufsicht auf Verzahnungen der erfindungsgemäßen elektromagnetischen Kupplung mit der Schaltmuffe im Auskopplungszustand gemäß einer zweiten Option;
- Figur 5 eine perspektivische Explosionsansicht aller relevanten Komponenten der elektromagnetischen Kupplung von Figur 3;
- Figur 6 das Detail A der elektromagnetischen Kupplung von Figur 3;
- Figur 7 das Detail A der elektromagnetischen Kupplung von Figur 3 mit der Schaltmuffe im teilweisen Einkupplungszustand;
- Figur 8 die schematische Darstellung der Verzahnungen von Figur 4 mit der Schaltmuffe im teilweisen Einkupplungszustand;
- Figur 9 das Detail der elektromagnetischen Kupplung von Figur 3 mit der Schaltmuffe im vollständigen Einkupplungszustand und bei Drehmomentübertragung; und
- Figur 10 die schematische Darstellung der Verzahnungen von Figur 4 mit der Schaltmuffe im vollständigen Einkupplungszustand und bei Drehmomentübertragung.

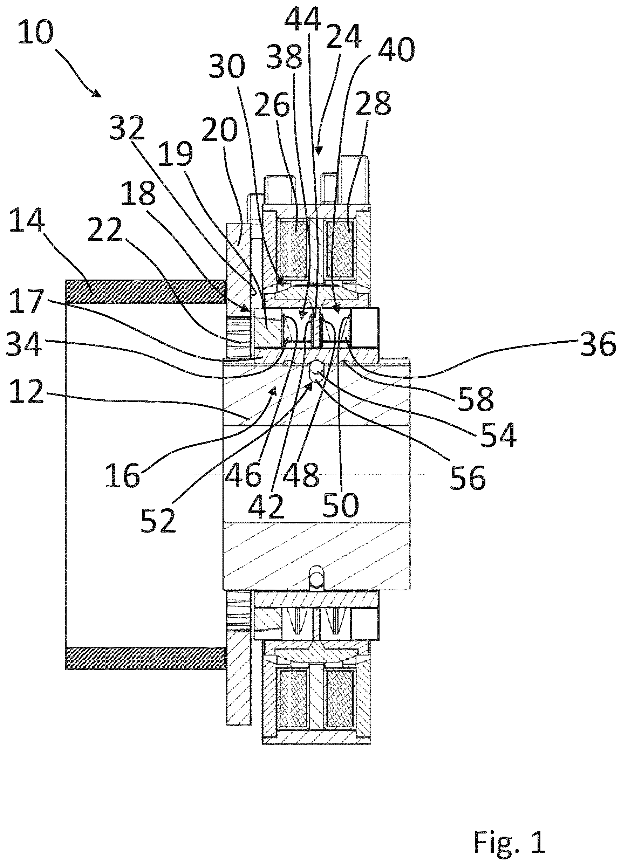

Figur 1 zeigt eine elektromagnetische Kupplung 10, die dazu dient, durch Öffnen und Schließen eine erste Welle 12 und eine koaxial zu der ersten Welle 12 ausgerichtete zweite Welle 14 miteinander zu koppeln.

Die elektromagnetische Kupplung 10 umfasst eine Schaltmuffe 16, die eine Schaltmuffenhülse 17 und eine erste Verzahnung 18 aufweist. Die Verzahnung 18 radial außenseitig des Umfangs ist auf einem mit der Schaltmuffenhülse 17 drehfest verbundenen Zahnrad 19 vorgesehen.

Alternativ kann die Schaltmuffe 16 auch einstückig ausgeführt sein.

Weiter ist die Schaltmuffe 16 drehfest auf der ersten Welle 12 angeordnet und linear entlang dieser zwischen einem Ein- und einem Auskupplungszustand verstellbar. Figur 1 zeigt die Schaltmuffe 16 im Auskupplungszustand.

Der zweiten Welle 14 ist ein erster Kupplungskörper 20 zugeordnet.

Der Kupplungskörper 20 weist eine zweite Verzahnung 22, hier eine Innenverzahnung auf und ist drehfest mit der zweiten Welle 14 gekoppelt, sodass der Kupplungskörper 20 koaxial zur ersten Welle 12 ausgerichtet ist.

Es ist aber auch denkbar, dass der erste Kupplungskörper 20 einen Teil der zweiten Welle 14 bildet und mit dieser einstückig ausgebildet ist.

Der Kupplungskörper 20 umfasst dabei zumindest einen ringförmigen Abschnitt und die zweite Verzahnung 22 verläuft entlang der radialen Innenseite des ringförmigen Abschnitts.

Die erste und zweite Verzahnung 18, 22 der Schaltmuffe 16 und des ersten Kupplungskörpers 20 sind dabei an den Enden der Wellen 12, 14 positioniert.

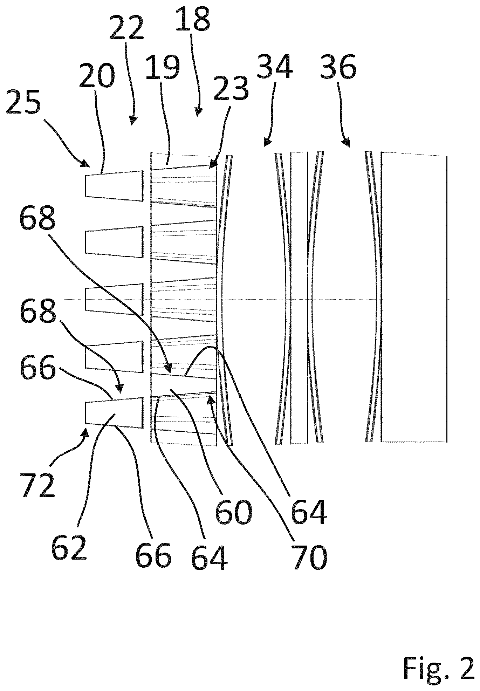

Wie in Figur 2 dargestellt weisen sowohl die erste als auch die zweite Verzahnung 18, 22 in Axialrichtung gesehen jeweils Hinterschnitte 23 und 25 auf.

Es ist alternativ auch denkbar, dass nur eine der Verzahnungen 18, 22 mit Hinterschnitten versehen ist.

Die erste und zweite Verzahnung 18, 22 dienen dazu, im Einkupplungszustand der Schaltmuffe 16 einen Formschluss zwischen der Schaltmuffe 16 und dem ersten Kupplungskörper 20 zu bilden.

Zur Verstellung der Schaltmuffe 16 zwischen dem Ein- und Auskupplungszustand ist ein Stator 24 vorgesehen, der eine erste Spule 26 und eine zweite Spule 28 umfasst.

Die erste Spule 26 dient zur Verstellung der Schaltmuffe 16 linear entlang der ersten Welle 12 in den Einkupplungszustand (in Figur 1 nach links) und die zweite Spule 28 zur Verstellung der Schaltmuffe 16 linear entlang der ersten Welle 12 entgegen des Einkupplungszustands, also weg vom ersten Kupplungskörper 20.

Zusätzlich oder alternativ zur zweiten Spule 28 kann auch eine Feder vorgesehen sein (in den Figuren nicht gezeigt), die auf die Schaltmuffe 16 eine Federkraft linear entlang der ersten Welle 12 entgegen des Einkupplungszustands aufbringt.

Die Verstellung der Schaltmuffe 16 durch die erste und zweite Spule 26, 28 kann dabei direkt erfolgen, indem die Spulen 26, 28 eine magnetische Kraft unmittelbar auf die Schaltmuffe 16 selbst ausüben.

Alternativ dazu kann, wie in Figur 1 gezeigt, zusätzlich ein Anker 30 vorgesehen sein, der mit der Schaltmuffe 16 in axialer Richtung gekoppelt ist. Die Verstellung der Schaltmuffe 16 erfolgt indirekt über den Anker 30. Der Anker 30 ist also über Bestromung der ersten oder zweiten Spule 26, 28 entlang der ersten Welle 12 verstellbar und kann die Schaltmuffe 16 mitnehmen.

Um magnetische Streuflüsse zu verhindern, kann der Anker 30 magnetisch von der Schaltmuffe 16 entkoppelt werden.

Dies kann beispielsweise erreicht werden, indem die Schaltmuffe 16 zumindest im Bereich hin zum Anker 30 mit einem Kunststoff beschichtet wird. Alternativ ist es auch möglich, für die Schaltmuffe 16 ein nicht ferromagnetisches Material zu wählen.

Weiter kann ein Anschlag 32 vorgesehen sein, der an dem ersten Kupplungskörper 20 vorgesehen ist und die Verstellung des Ankers 30 durch die erste Spule 26 in Richtung des ersten Kupplungskörpers 20 begrenzt.

Weiter sind eine erste elastische Federeinheit 34 und eine zweite elastische Federeinheit 36 vorgesehen, über die der Anker 30 und die Schaltmuffe 16 in axialer Richtung zueinander verschiebbar gekoppelt sind.

Die elastischen Federeinheiten 34, 36 sind dabei derart zwischen dem Anker 30 und der Schaltmuffe 16 angeordnet, dass eine Relativverschiebung in axialer Richtung zumindest das Einfedern einer der Federeinheiten 34, 36 zur Folge hat.

Alternativ ist auch eine Ausführung denkbar, bei der nur eine Federeinheit zum Einsatz kommt.

Die erste elastische Federeinheit 34 und die zweite elastische Federeinheit 36 sind in Räumen 38, 40 untergebracht.

Beide der Räume 38, 40 sind dabei radial innenseitig durch die Schaltmuffenhülse 17 begrenzt. Radial außenseitig sind die beiden Räume 38, 40 durch den Anker 30 definiert.

In axialer Richtung ist der Raum 38 für die Federeinheit 34 durch eine erste axiale Anlagefläche 42 begrenzt, die auf einem radialen Steg 44 des Ankers 30 vorgesehen ist. Weiter wird der Raum 38 auf der der ersten axialen Anlagefläche 42 gegenüberliegenden Seite durch eine zweite axiale Anlagefläche 46 begrenzt.

Die zweite axiale Anlagefläche 46 ist dabei an der Stirnseite des Zahnrads 19 vorgesehen.

Folglich ist die erste elastische Federeinheit 34 in axialer Richtung an der ersten axialen Anlagefläche 42 und der zweiten axialen Anlagefläche 46 abgestützt und kann optional zwischen den axialen Anlageflächen 42, 46 vorgespannt sein.

Der Raum 40 wird durch eine dritte axiale Anlagefläche 48, die auf der der zweiten axialen Anlagefläche 46 entgegengesetzten Seite des Stegs 44 vorgesehen ist, sowie eine vierte axiale Anlagefläche 50, die an der Schaltmuffe 16 vorgesehen ist.

Dabei stützt sich die zweite elastische Federeinheit 36 in axialer Richtung an der dritten axialen Anlagefläche 48 und der vierten axialen Anlagefläche 50 ab. Optional kann diese ebenfalls zwischen den Anlageflächen 48, 50 vorgespannt sein.

Beide der Federeinheiten 34, 36 umfassen dabei jeweils wenigstens einen Wellenring. Alternativ können sie auch jeweils ein Paket aus mehreren Wellenringen umfassen.

Alternativ ist es auch denkbar, dass jede der Federeinheiten 34, 36 jeweils eine Tellerfeder oder ein Tellerfederpaket umfasst.

Anstelle der zwei elastischen Federeinheiten 34, 36 ist es auch denkbar, die elektromagnetische Kupplung nur mit der ersten elastischen Federeinheit 34 oder nur mit der zweiten elastischen Federeinheit 36 auszuführen.

Darüber hinaus kann die elektromagnetische Kupplung 10 eine Federrastierung 52 umfassen, die einen Federring 54 aufweist, der innerhalb einer an der ersten Welle 12 vorgesehenen Nut 56 geführt ist, und in Aussparungen 58 greifen kann, die an der Schaltmuffe 16 vorgesehen sind, sodass die Federrastierung 52 eine Haltekraft auf die Schaltmuffe 16 im Auskupplungszustand ausübt.

Entsprechend den obigen Ausführungen zeigt Figur 2 die mit Hinterschnitten 23, 25 versehene erste und zweite Verzahnung 18, 22 im Detail. Die erste Verzahnung weist Zähne 60 auf und die zweite Verzahnung 22 Zähne 62.

Die jeweiligen Hinterschnitte 23, 25 der Verzahnungen 18, 22 werden durch die keilförmigen Zahnflanken 64 der Zähne 60 sowie die keilförmigen Zahnflanken 66 der Zähne 62 gebildet, wobei sich hierdurch keilförmige Abschnitte 68, d.h. Lücken, ausbilden.

Entsprechend Figur 2 sind dabei die jeweiligen Zahnflanken 64, 66 über die gesamte axiale Länge der Zähne 60, 62 keilförmig. Somit entsprechen die keilförmigen Abschnitte 68 der gesamten Zahnflanke.

Es ist aber auch denkbar, dass die keilförmigen Abschnitte 68 nur einem Teil der gesamten Zahnflanke entsprechen.

Aufgrund der keilförmigen Zahnflanken 64 weisen die Zähne 60 zulaufende Enden 70 auf und die Zähne 62 wegen der keilförmigen Zahnflanken 66 zulaufende Enden 72. Die zulaufenden Enden 70 verlaufen in eine entgegengesetzte Richtung wie die zulaufenden Enden 72, sodass die Enden 70, 72 in entgegengesetzte Richtungen weisen.

Die zulaufenden Enden 70 sind auf der dem Kupplungskörper 20 abgewandten Seite des keilförmigen Abschnitts 68 der ersten Verzahnung 18 angeordnet und die zulaufenden Enden 72 auf der der Schaltmuffe 16 abgewandten Seite des keilförmigen Abschnitts 68 der zweiten Verzahnung 22.

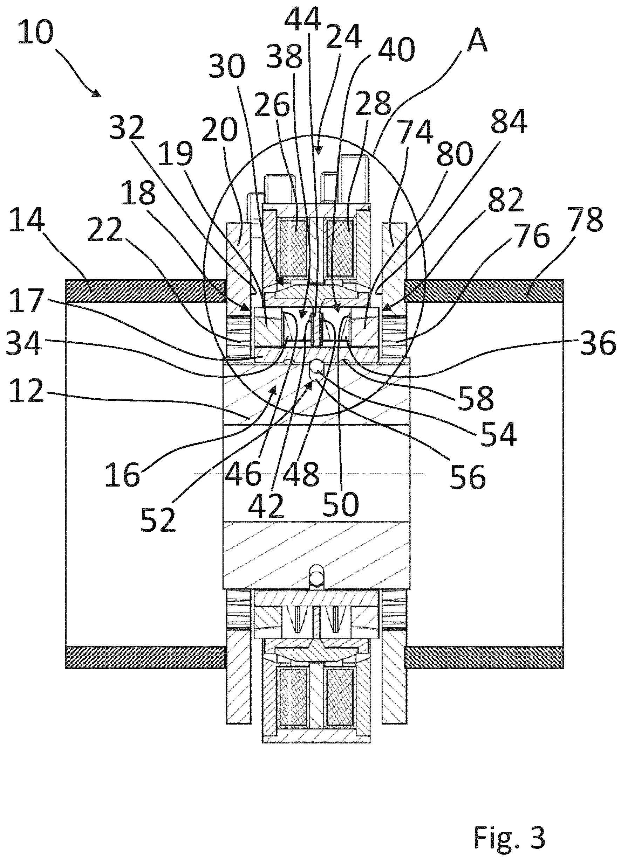

Die Figuren 3 bis 10 zeigen die elektromagnetische Kupplung 10 gemäß einer zweiten Option. Im Unterschied zu der in Figur 1 gezeigten elektromagnetischen Kupplung 10 umfasst die elektromagnetische Kupplung 10 gemäß der zweiten Option zusätzlich einen zweiten Kupplungskörper 74, der koaxial zur ersten Welle 12 ausgerichtet ist und auf einer dritten Welle 78 angeordnet ist.

Der zweite Kupplungskörper 74 weist dabei eine dritte Verzahnung 76 auf.

Entsprechend der vorherigen Erläuterungen zum ersten Kupplungskörper 20 kann auch der zweite Kupplungskörper 74 als eigenständiges Bauteil auf der dritten Welle 78 vorgesehen sein oder einteilig mit dieser ausgeführt sein.

Darüber hinaus ist zusätzlich ein zweites Zahnrad 80 auf der dem zweiten Kupplungskörper 74 zugewandten Seite der Schaltmuffe 16 angeordnet, dessen dem Steg 44 zugewandte Stirnseite die vierte axiale Anlagefläche 50 bildet. Das zweite Zahnrad 80 ist dabei mit einer vierten Verzahnung 82 versehen.

Bei der elektromagnetischen Kupplung 10 gemäß der zweiten Option kann die Schaltmuffe 16 direkt oder indirekt über den Anker 30 mittels der zweiten Spule 28 hin zum zweiten Kupplungskörper 74 in einen Einkupplungszustand verstellt werden, bei dem ein Formschluss durch die dritte Verzahnung 76 und die vierte Verzahnung 82 zwischen der dritten Welle 78 und der Schaltmuffe 16 gebildet wird.

Darüber hinaus ist an dem zweiten Kupplungskörper 74 ein Anschlag 84 vorgesehen, der eine Verstellung des Ankers 30 begrenzt.

Weiter gelten hinsichtlich der dritten Verzahnung 76 analog die Ausführungen zur zweiten Verzahnung 22 und zur vierten Verzahnung 82 die obigen Erläuterungen zur ersten Verzahnung 18.

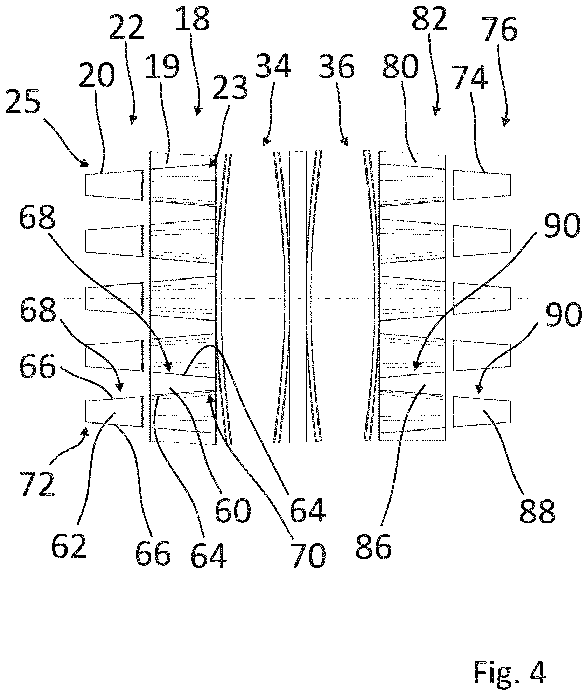

Entsprechend Figur 4 weisen die dritte und vierte Verzahnung 76, 82 Zähne 86, 88 auf, die analog zu denen der ersten und zweiten Verzahnung 18, 22 ausgebildet sind und weisen ebenfalls Hinterschnitte auf. Folglich weisen die dritte und vierte Verzahnung 76, 82 keilförmige Abschnitte 90 auf.

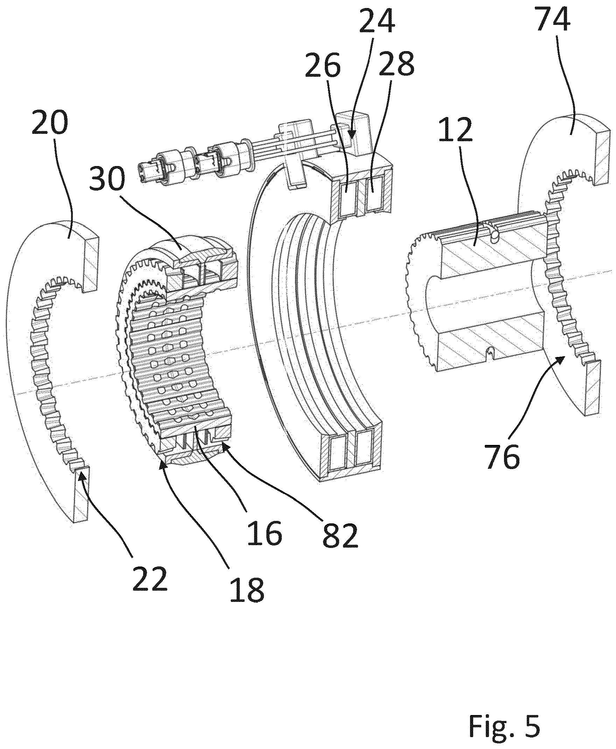

Nachfolgend soll anhand der Figuren 4 und 6 bis 10 die Funktionsweise und der Betrieb der elektromagnetischen Kupplung 10 erläutert werden. In den Figuren 5 bis 10 ist die elektromagnetische Kupplung 10 gemäß der zweiten Option gezeigt, dennoch gelten diese Ausführungen ebenso für die in den Figuren 1 und 2 gezeigte elektromagnetische Kupplung 10.

Weiter wird die Funktion der elektromagnetischen Kupplung ausschließlich anhand einem Kuppeln der Schaltmuffe 16 mit dem ersten Kupplungskörper 20 beschrieben. Die Erläuterungen lassen sich allerdings gleichermaßen auch auf ein Kuppeln der Schaltmuffe 16 mit dem zweiten Kupplungskörper 74 anwenden.

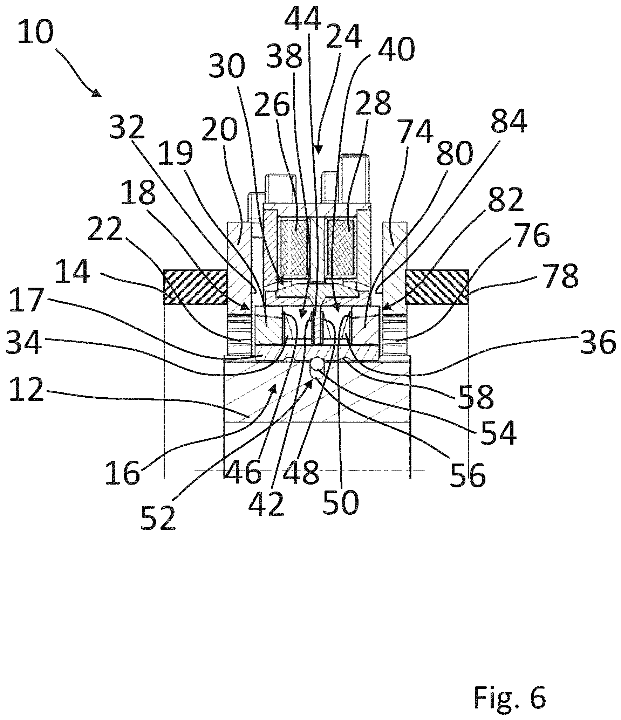

Ausgangszustand bildet hierbei der Auskupplungszustand der Schaltmuffe 16, wie in den Figuren 4 und 6 gezeigt.

Es liegt also kein Formschluss zwischen einer der Verzahnungen der Schaltmuffe und der Verzahnungen der Kupplungskörper 20, 74 vor.

Um die Schaltmuffe 16 in diesem geöffneten Zustand zu halten und sicherzustellen, dass diese geöffnet bleibt, übt die Federrastierung 52 eine Haltekraft im Auskupplungszustand auf die Schaltmuffe aus.

Alternativ oder zusätzlich dazu kann durch Bestromen der ersten und zweiten Spule 26, 28 die Schaltmuffe 16 über den Anker 30, mit dem die Schaltmuffe über die elastischen Federeinheiten 34, 36 gekoppelt ist, eine Haltekraft im Auskupplungszustand ausüben.

Soll die Schaltmuffe 16 aus dem Auskupplungszustand hin zum ersten Kupplungskörper 20 verschoben werden, so muss demnächst eine Spannung an die erste Spule angelegt werden.

Wird die Schaltmuffe 16 durch die erste und zweite Spule 26, 28 in dem Auskupplungszustand gehalten, so muss zusätzlich die angelegte Spannung an der zweiten Spule 28 verringert oder aufgehoben werden.

Das Spannungsanlegen an die erste Spule 26 sorgt für einen magnetischen Fluss, durch den eine magnetische Kraft auf den Anker 30 in Richtung des ersten Kupplungskörpers 20 wirkt.

Die magnetische Kraft verschiebt den Anker 30, der wiederum über die erste und zweite elastische Federeinheit 34, 36 mit der Schaltmuffe 16 gekoppelt ist. Damit hat ein Verschieben des Ankers 30 bei vorgespannten elastischen Federeinheiten 34, 36 unmittelbar eine Mitnahme der Schaltmuffe 16 zur Folge.

Bei nicht vorgespannten elastischen Federeinheiten 34, 36 muss zumindest eine der Federeinheiten 34, 36 zunächst komprimiert werden, sodass sich eine Federkraft aufbaut. Die sich aufbauende Federkraft wirkt dabei auf die Schaltmuffe 16, sodass die Schaltmuffe 16 indirekt durch den Anker 30 über die Federeinheit mitgenommen wird, sobald der Betrag der Federkraft den Betrag einer eventuell wirkenden Haltekraft übertrifft.

Diese Verschiebung des Ankers 30 hin zum ersten Kupplungskörper 20 findet solange statt, bis der Anker 30 den auf dem ersten Kupplungskörper 20 vorgesehenen Anschlag 32 erreicht. Bei bestromter Spule 26 wirkt dabei eine magnetische Haltekraft auf den Anker 30.

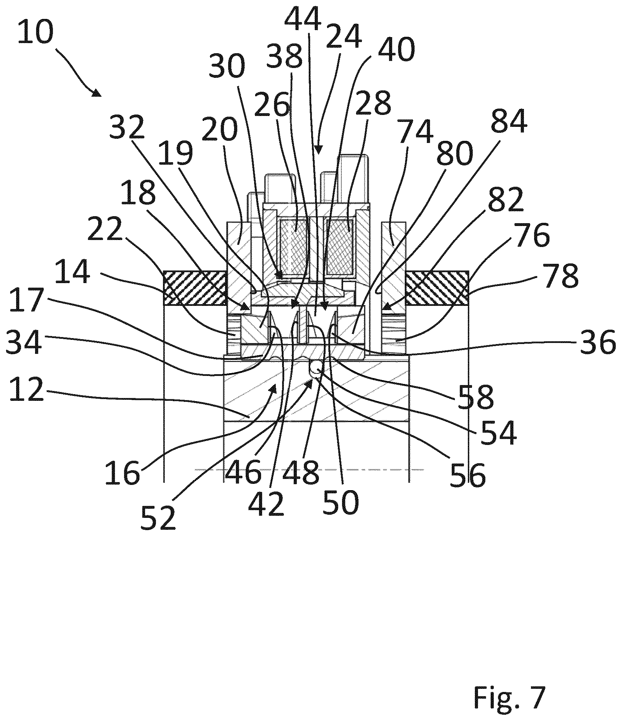

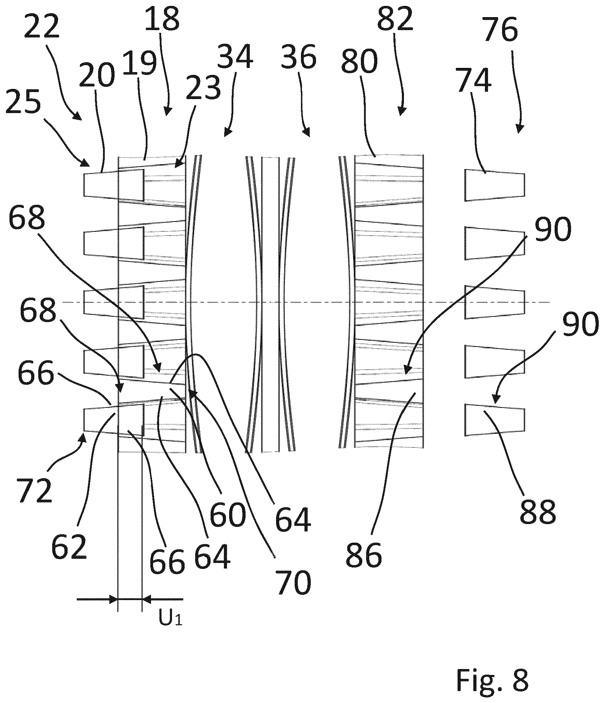

Hierbei kann die erste Verzahnung 18 der Schaltmuffe 16 entweder, wie in den Figuren 7 und 8 gezeigt ist, vor Erreichen des Anschlags 32 bereits direkt in die zweite Verzahnung 22 des ersten Kupplungskörpers 20 eingreifen, sodass sich ein Formschluss ausbildet.

Es kann jedoch auch zuerst zu einem stirnseitigen Kontaktieren der ersten und zweiten Verzahnung 18, 22 kommen, bevor der Anschlag 32 erreicht ist. In diesem Fall liegen die Verzahnungen 18, 22 also Zahn auf Zahn, und ein weiteres axiales Verschieben der Schaltmuffe 16 hin zum ersten Kupplungskörper 20 ist unterbunden.

Dadurch findet eine Relativbewegung zwischen der Schaltmuffe 16, die den ersten Kupplungskörper 20 stirnseitig kontaktiert, und dem Anker 30 statt, auf dem weiterhin eine magnetische Kraft wirkt, wodurch sich dieser weiterbewegt, bis er Anschlag 32 erreicht ist.

Dies hat zur Folge, dass die erste Federeinheit 34 zwischen der ersten axialen Anlagefläche 42 und der zweiten axialen Anlagefläche 46 komprimiert wird, da die Abmessungen des Raums 38 in axialer Richtung abnehmen.

Gleichzeitig nimmt der Raum 40 in axialer Richtung zu, sodass sich die dritte und vierte axiale Anlagefläche 48, 50 voneinander wegbewegen.

Ein stirnseitiges Kontaktieren der ersten und zweiten Verzahnung 18, 22 hat also ein zusätzliches Vorspannen der ersten elastischen Federeinheit 34 zur Folge, sodass eine zusätzliche Federkraft auf die Schaltmuffe 16 hin zum ersten Kupplungskörper 20 wirkt.

Findet eine relative Verdrehung zwischen der Schaltmuffe 16 und dem ersten Kupplungskörper 20 statt, bewegt sich die Schaltmuffe 16 in den Einkupplungszustand, wobei die Schaltmuffe 16 aufgrund der anliegenden Federkraft in einer beschleunigten Bewegung hin zum Einkupplungszustand gemäß Figur 7 verschoben wird.

Hierdurch bildet sich ein Formschluss zwischen der Schaltmuffe 16 und dem ersten Kupplungskörper 20 aus, der durch die erste und zweite Verzahnung 18, 22 gebildet wird. Hierbei liegt eine erste axiale Überdeckung U₁ zwischen der ersten und zweiten Verzahnung 18, 22 vor (siehe Figur 8).

Findet eine Drehmomentübertragung zwischen dem ersten Kupplungskörper 20 und der ersten Welle 12 statt, hat dies aufgrund der keilförmigen Verzahnungen 18, 22 eine Kraft auf die Schaltmuffe 16 in Richtung des Einkupplungszustands, also hin zum ersten Kupplungskörper 20 zur Folge.

Die auf die Schaltmuffe 16 wirkende Kraft ist dabei maßgeblich abhängig von der Geometrie der Hinterschnitte 23, 25 und dem vorliegenden Drehmoment.

Ab einem gewissen Drehmoment nimmt die Kraft, welche auf die Schaltmuffe 16 wirkt, derart zu, dass die Schaltmuffe 16 dadurch relativ zu dem am Anschlag 32 befindlichen Anker 30 hin zum ersten Kupplungskörper 20 bewegt wird, sodass sich die axiale Überdeckung der ersten und zweiten Verzahnung 18, 22 weiter erhöht, bis eine zweite axiale Überdeckung U₂ erreicht ist, die einer maximalen axialen Überdeckung entspricht und den Betrag der ersten axialen Überdeckung U₁ übertrifft.

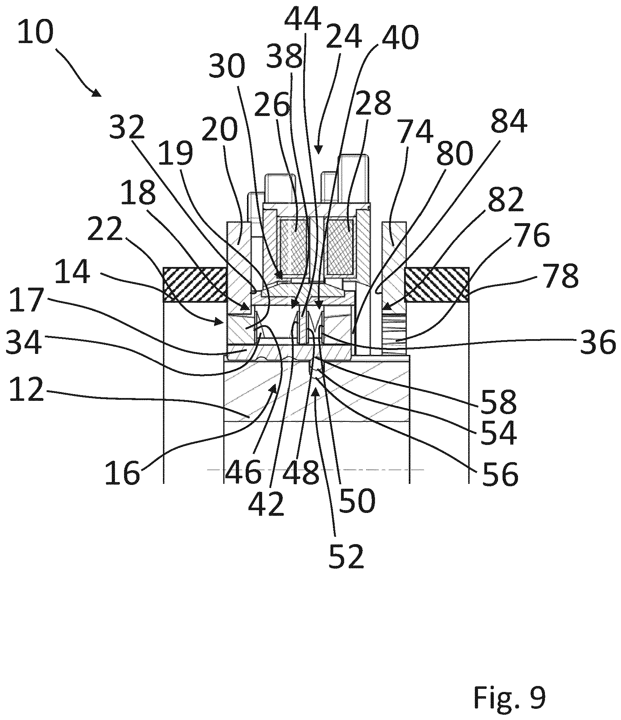

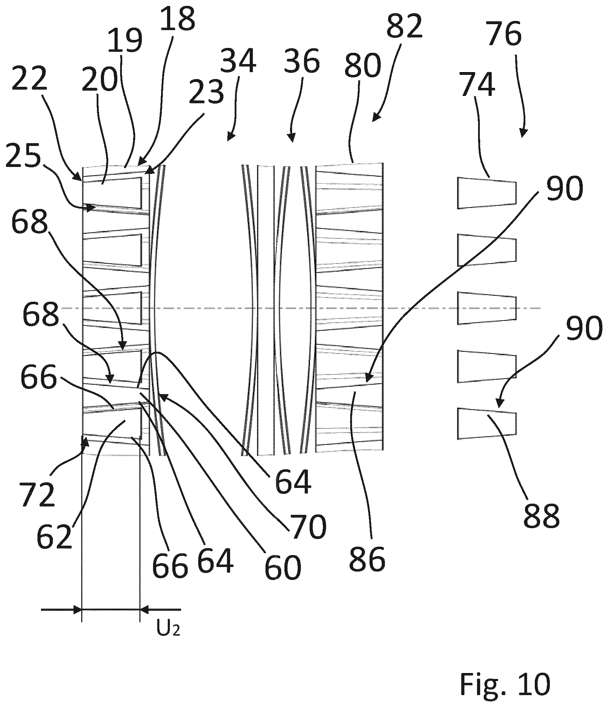

Dieser Zustand ist in den Figuren 9 und 10 gezeigt.

Durch die relative Bewegung zwischen der Schaltmuffe 16 und dem Anker 30 vergrößert sich der Raum 38 in axialer Richtung, sodass sich erst die elastische Federeinheit 34 in axialer Richtung entspannt (vorausgesetzt diese hat sich zuvor in einem vorgespannten Zustand befunden). Gleichzeitig wird der Raum 40 in axialer Richtung verringert, wodurch die zweite elastische Federeinheit 36 zwischen der dritten axialen Anlagefläche 48 des Stegs 44 und der vierten axialen Anlagefläche 50 des zweiten Zahnrads 80 komprimiert wird.

Weiter kann zusätzlich entsprechend Figur 9 die Federrastierung 52 in diesem Zustand wirken und eine Haltekraft auf die Schaltmuffe 16 ausüben, da in dieser Stellung auf der Innenseite der Schaltmuffe 16 eine weitere Nut vorhanden ist, in die der Federring 56 einrasten kann.

Wird das zwischen dem ersten Kupplungskörper 20 und der ersten Welle 12 übertragene Drehmoment aufgehoben oder verringert, so wird die Schaltmuffe 16 zumindest ab einem gewissen Schwellwert des Drehmoments aufgrund der Federkraft, die durch die stark komprimierte zweite elastische Federeinheit 36 auf die Schaltmuffe 16 wirkt, weg vom ersten Kupplungskörper 20 verschoben, sodass die erste und zweite Verzahnung 18, 22 wieder die erste axiale Überdeckung U₁ einnehmen, wie in den Figuren 7 und 8 gezeigt.

Soll die Schaltmuffe nun zurück in den Auskupplungszustand verschoben werden, so muss zunächst die magnetische Kraft, welche durch die an die erste Spule 26 angelegte Spannung erzeugt wird, reduziert oder aufgehoben werden.

Weiter muss eine Spannung an die zweite Spule 28 angelegt werden, welche eine magnetische Kraft auf den Anker 30 ausübt, die weg vom ersten Kupplungskörper 20 wirkt.

Dies hat ein Verschieben des Ankers 30 zur Folge, wodurch auf die Schaltmuffe 16 unter Zwischenschaltung der ersten und zweiten elastischen Federeinheit 34, 36 aus dem Einkupplungszustand zurück in den Auskupplungszustand entsprechend den Figuren 5 und 6 bewegt wird.

In diesem Zustand kann die Schaltmuffe wiederum entsprechend den obigen Erläuterungen durch die Federrastierung 52 und/oder über den Anker 30 durch Bestromung der ersten und zweiten Spule 26, 28 gehalten werden.

## Patentansprüche

1. Elektromagnetische Kupplung mit
einer Schaltmuffe (16), die eine erste Verzahnung (18) aufweist, die drehfest auf einer ersten Welle (12) angeordnet ist und linear entlang der ersten Welle (12) zwischen einem Ein- und Auskupplungszustand verstellbar ist,
einem ersten Kupplungskörper (20), der eine zweite Verzahnung (22) aufweist und der koaxial zur ersten Welle (12) ausgerichtet ist,
einem Stator (24), der eine erste Spule (26) umfasst, die zur direkten oder indirekten Verstellung der Schaltmuffe (16) linear entlang der ersten Welle (12), dient,
wobei die erste und/oder zweite Verzahnung (18, 22) in Richtung zum Einkupplungszustand Hinterschnitte (23, 25) aufweist/-en, die derart ausgebildet ist/sind, dass eine Drehmomentübertragung zwischen der ersten Welle (12) und dem ersten Kupplungskörper (20) eine Kraft auf die Schaltmuffe (16) in Richtung Einkupplungszustand erzeugt,
wobei im Einkupplungszustand ein Formschluss durch die erste und zweite Verzahnung (18, 22) zwischen der Schaltmuffe (16) und dem ersten Kupplungskörper (20) vorliegt,
wobei ein Anker (30) vorgesehen ist, der mit der Schaltmuffe (16) gekoppelt ist, und wobei der Anker (30) über Bestromen der ersten und/oder einer zweiten Spule (28) entlang der ersten Welle (12) verstellbar ist, wobei der Anker (30) und die Schaltmuffe (16) in axialer Richtung zueinander verschiebbar gekoppelt sind, **dadurch gekennzeichnet, dass** eine Verstellung des Ankers (30) durch zumindest eine der Spulen (26, 28) durch einen Anschlag (32) begrenzt ist, der an dem ersten Kupplungskörper (20) vorgesehen ist, und dass bei einer Anlage des Ankers (30) am Anschlag (32) bei bestromter Spule (26, 28) eine magnetische Haltekraft vorliegt, die auf den Anker (30) wirkt.

2. Elektromagnetische Kupplung nach Anspruch 1, **dadurch gekennzeichnet, dass** die erste Spule (26) zur direkten oder indirekten Verstellung der Schaltmuffe (16) linear entlang der ersten Welle (12) in den Einkupplungszustand dient und dass der Stator (24) eine zweite Spule (28) umfasst, die zur direkten oder indirekten Verstellung der Schaltmuffe (16) linear entlang der ersten Welle (12) entgegen des Einkupplungszustands dient und/oder dass eine Federrückstellung vorgesehen ist, die auf die Schaltmuffe (16) eine Federkraft linear entlang der ersten Welle (12) entgegen des Einkupplungszustands aufbringt.

3. Elektromagnetische Kupplung nach Anspruch 1 oder 2, **dadurch gekennzeichnet, dass** bei einer Verstellung der Schaltmuffe (16) mittels der ersten Spule (26) in den Einkupplungszustand eine axiale Überdeckung (U1, U2) zwischen der ersten und zweiten Verzahnung (18, 22) vorliegt und die Hinterschnitte (23, 25) bei einer Drehmomentübertragung die Schaltmuffe (16) hin zum Einkupplungszustand verschieben.

4. Elektromagnetische Kupplung nach einem der vorherigen Ansprüche, **dadurch gekennzeichnet, dass** die mit Hinterschnitten (23, 25) versehene erste und/oder zweite Verzahnung (18, 22) Zähne (60, 62) aufweist/-en, deren Zahnflanken (64, 66) in der Draufsicht zumindest entlang eines Abschnitts des Zahns (60, 62) keilförmig verlaufen, insbesondere dass die erste und die zweite Verzahnung (18, 22) Hinterschnitte (23, 25) aufweist, und die zulaufenden Enden (70, 72) der keilförmigen Abschnitte (68) der ersten und zweiten Verzahnung (18, 22) in entgegengesetzte Richtungen verlaufen.

5. Elektromagnetische Kupplung nach einem der vorherigen Ansprüche, **dadurch gekennzeichnet, dass** der Anker (30) und die Schaltmuffe (16) über zumindest eine erste, in axialer Richtung elastische Federeinheit (34) gekoppelt sind, die bei axialer Relativverschiebung der Schaltmuffe (16) und des Ankers (30) zueinander einfedert.

6. Elektromagnetische Kupplung nach einem der vorherigen Ansprüche, **dadurch gekennzeichnet, dass** zumindest eine Federeinheit (34, 36) so angeordnet ist, dass bei sich stirnseitig kontaktierender erster und zweiter Verzahnung (18, 22) und bei noch nicht mit dem ersten Kupplungskörper (20) gekoppelter Schaltmuffe (16) die Federeinheit (34, 36) die Schaltmuffe (16) in Richtung zum Einkupplungszustand vorspannt.

7. Elektromagnetische Kupplung nach Anspruch 5 oder 6, **dadurch gekennzeichnet, dass** der Anker (30) eine erste axiale Anlagefläche (42) aufweist und die Schaltmuffe (16) eine zweite axiale Anlagefläche (46) und dass sich die erste elastische Federeinheit (34) in axialer Richtung an der ersten und zweiten axialen Anlagefläche (42, 46) abstützt.

8. Elektromagnetische Kupplung nach Anspruch 7, **dadurch gekennzeichnet, dass** der Anker (30) einen radialen Steg (44) aufweist, auf dem die erste axiale Anlagefläche (42) vorgesehen ist, insbesondere dass auf einer axialen Seite des Stegs (44) die erste und auf der entgegengesetzten Seite des Stegs (44) eine zweite Federeinheit (36) vorhanden ist, wobei zumindest eine der Federeinheiten (34, 36) eine Rückstellkraft bei Relativverschiebung von Anker (30) und Schaltmuffe (16) ausübt.

9. Elektromagnetische Kupplung nach Anspruch 8, **dadurch gekennzeichnet, dass** die Federeinheiten (34, 36) in Räumen (38, 40) untergebracht sind, die 15 radial innenseitig durch eine Schaltmuffenhülse (17) und radial außenseitig durch den Anker (30) sowie an einer Stirnseite durch den Steg (44) und an der entgegengesetzten Stirnseite durch ein fest mit der Schaltmuffenhülse (17) verbundenes Zahnrad (19) begrenzt werden, wobei das Zahnrad (19) die erste Verzahnung (18) aufweist und im Einkupplungszustand in die am ersten Kupplungskörper (20) vorgesehene zweite Verzahnung (22) eingreift.

10. Elektromagnetische Kupplung nach einem der Ansprüche 5 bis 9, **dadurch gekennzeichnet, dass** die zumindest eine Federeinheit (34, 36) zumindest ein Wellenring oder eine Tellerfeder oder ein Paket aus diesen umfasst.

11. Elektromagnetische Kupplung nach einem der Ansprüche 5 bis 10, **dadurch gekennzeichnet, dass** zumindest eine Federeinheit (34, 36) so angeordnet ist, dass bei noch nicht mit dem ersten Kupplungskörper (20) gekoppelter Schaltmuffe (16) diese Federeinheit (34, 36) vorgespannt ist, um eine Federkraft auf die Schaltmuffe in Richtung zum Einkupplungszustand auszuüben.

12. Elektromagnetische Kupplung nach einem der Ansprüche 5 bis 11, **dadurch gekennzeichnet, dass** zumindest eine Federeinheit (34, 36) so angeordnet ist, dass bei mit dem ersten Kupplungskörper (20) gekoppelter Schaltmuffe (16) diese Federeinheit (34, 36) vorgespannt ist, um eine Federkraft auf die Schaltmuffe in Richtung Auskupplungszustand auszuüben.

13. Elektromagnetische Kupplung nach einem der vorherigen Ansprüche, **dadurch gekennzeichnet, dass** ein zweiter Kupplungskörper (74) vorgesehen ist, der koaxial zur ersten Welle (12) ausgerichtet und auf der dem ersten Kupplungskörper (20) entgegengesetzten axialen Seite der Schaltmuffe (16) vorgesehen und mit der Schaltmuffe (16) über Betätigung der zweiten Spule (28) koppelbar ist, wobei die Verzahnung (76) des zweiten Kupplungskörpers (74) und die zugeordnete Verzahnung (82) der Schaltmuffe (16) wie die Verzahnung (22) des ersten Kupplungskörpers (20) und deren zugeordnete Verzahnung (18) ausgebildet sind, insbesondere dass bei Bewegen der Schaltmuffe (16) in den Einkupplungszustand mit dem zweiten Kupplungskörper (74) die Federeinheiten (34, 36) vor und nach dem Einkuppeln in Richtung des Einkupplungszustands oder des Auskupplungszustands auf die Schaltmuffe (16) wirken.

14. Verfahren zum Schließen und Öffnen einer elektromagnetischen Kupplung (10), nach einem der vorhergehenden Ansprüche, mit einem Anker (30) und einer damit gekoppelten Schaltmuffe (16), die eine erste Verzahnung (18) aufweist, drehfest auf einer ersten Welle (12) angeordnet ist und linear entlang der ersten Welle (12) zwischen einem Ein- und Auskupplungszustand verstellbar ist, einem ersten Kupplungskörper (20) mit einer zweiten Verzahnung (22), der koaxial zur ersten Welle (12) ausgerichtet ist, einer ersten Spule (26), die zur Verstellung der Schaltmuffe (16) linear entlang der ersten Welle (12) in den Einkupplungszustand dient, und einer zweiten Spule (28), die zur Verstellung der Schaltmuffe (16) linear entlang der ersten Welle (12) entgegen dem Einkupplungszustand dient, mit den folgenden Schritten:
a) Spannungsanlegen an die erste Spule (26) und Erzeugen einer auf den Anker (30) wirkenden magnetischen Kraft hin zum ersten Kupplungskörper (20);
b) Verschieben des Ankers (30) und Mitnahme der Schaltmuffe (16) durch den Anker (30) aus einem Auskupplungszustand in Richtung des Einkupplungszustands unter Zwischenschaltung einer Federeinheit (34, 36) zwischen Anker (30) und Schaltmuffe (16);
c) Bewegen der Schaltmuffe (16) in den Einkupplungszustand der Schaltmuffe (16) und Ausbilden eines Formschlusses zwischen der Schaltmuffe (16) und dem ersten Kupplungskörper (20) durch die erste und zweite Verzahnung (18, 22), wobei die erste und zweite Verzahnung (18, 22) eine erste axiale Überdeckung (U1) zueinander aufweisen;
d) Übertragen eines Drehmoments zwischen dem ersten Kupplungskörper (20) und der ersten Welle (12) sowie Verschieben der Schaltmuffe (16) relativ zum Anker (30) hin zum ersten Kupplungskörper (20), wobei die erste und zweite Verzahnung (18, 22) eine zweite axiale Überdeckung (U2) zueinander aufweisen, die den Betrag der ersten übertrifft;
e) Aufheben oder Verringern des übertragenen Drehmoments zwischen dem ersten Kupplungskörper (20) und der ersten Welle (12) sowie Verschieben der Schaltmuffe (16) relativ zum Anker (30) weg vom ersten Kupplungskörper (20), wobei die erste und zweite Verzahnung (18, 22) die erste axiale Überdeckung (U1) zueinander aufweisen;
f) Aufheben oder Verringern der auf den Anker (30) wirkenden magnetischen Kraft durch die erste Spule (26);
g) Spannungsanlegen an die zweite Spule (28) und Erzeugen einer auf den Anker (30) wirkenden magnetischen Kraft; und
h) Verschieben des Ankers (30) und Mitnahme der Schaltmuffe (16) durch den Anker (30) aus einem Einkupplungszustand in den Auskupplungszustand.

## Claims

1. An electromagnetic clutch, comprising
a shifting sleeve (16) which has a first toothing (18), is arranged in a rotationally fixed manner on a first shaft (12) and can be displaced linearly along the first shaft (12) between an engaged and a disengaged state,
a first clutch body (20), which has a second toothing (22) and which is aligned coaxially with the first shaft (12),
a stator (24), which comprises a first coil (26), which serves for the direct or indirect displacement of the shifting sleeve (16) linearly along the first shaft (12),
wherein the first and/or the second toothing (18, 22) has/have undercuts (23, 25) in the direction of the engaged state, which are configured such that a torque transmission between the first shaft (12) and the first clutch body (20) generates a force on the shifting sleeve (16) in the direction of the engaged state,
wherein, in the engaged state, there is a positive fit due to the first and the second toothing (18, 22) between the shifting sleeve (16) and the first clutch body (20),
wherein an armature (30) is provided which is coupled to the shifting sleeve (16), and wherein the armature (30) is adapted to be displaced along the first shaft (12) by energizing the first and/or the second coil (28), the armature (30) and the shifting sleeve (16) being coupled so as to be displaceable relative to each other in the axial direction,
**characterized in that** a displacement of the armature (30) by at least one of the coils (26, 28) is limited by a stop (32) which is provided on the first clutch body (20), and **in that**, when the armature (30) rests against the stop (32) when the coil (26, 28) is energized, there is a magnetic holding force which acts on the armature (30).

2. The electromagnetic clutch according to claim 1, **characterized in that** the first coil (26) serves for direct or indirect displacement of the shifting sleeve (16) linearly along the first shaft (12) into the engaged state, and **in that** the stator (24) comprises a second coil (28), which serves for direct or indirect displacement of the shifting sleeve (16) linearly along the first shaft (12) in the direction opposite to the engaged state and/or **in that** a spring return is provided which applies a spring force to the shifting sleeve (16) linearly along the first shaft (12) in the direction opposite to the engaged state.

3. The electromagnetic clutch according to claim 1 or 2, **characterized in that** when the shifting sleeve (16) is displaced by means of the first coil (26) into the engaged state, there is an axial overlap (U₁, U₂) between the first and the second toothing (18, 22) and the undercuts (23, 25) move the shifting sleeve (16) towards the engaged state when torque is transmitted.

4. The electromagnetic clutch according to any of the preceding claims, **characterized in that** the first and/or the second toothing (18, 22) provided with undercuts (23, 25) has/have teeth (60, 62) the tooth flanks (64, 66) of which are wedge-shaped at least along a section of the tooth (60, 62) in a plan view, in particular **in that** the first and the second toothing (18, 22) have undercuts (23, 25) and the tapered ends (70, 72) of the wedge-shaped sections (68) of the first and the second toothing (18, 22) extend in opposite directions.

5. The electromagnetic clutch according to any of the preceding claims, **characterized in that** the armature (30) and the shifting sleeve (16) are coupled via at least a first spring unit (34) which is elastic in the axial direction and which deflects when the shifting sleeve (16) and the armature (30) are displaced axially relative to each other.

6. The electromagnetic clutch according to any of the preceding claims, **characterized in that** at least one spring unit (34, 36) is arranged such that when the first and the second toothing (18, 22) are in contact on the end face and the shifting sleeve (16) is not yet coupled to the first clutch body (20), the spring unit (34, 36) pretensions the shifting sleeve (16) in the direction of the engaged state.

7. The electromagnetic clutch according to claim 5 or 6, **characterized in that** the armature (30) has a first axial abutment surface (42) and the shifting sleeve (16) has a second axial abutment surface (46), and **in that** the first elastic spring unit (34) is supported in the axial direction on the first and the second axial abutment surfaces (42, 46).

8. The electromagnetic clutch according to claim 7, **characterized in that** the armature (30) has a radial web (44) on which the first axial abutment surface (42) is provided, in particular **in that** the first spring unit is present on an axial side of the web (44) and a second spring unit (36) is present on the opposite side of the web (44), at least one of the spring units (34, 36) exerting a restoring force when the armature (30) and the shifting sleeve (16) are displaced relative to each other.

9. The electromagnetic clutch according to claim 8, **characterized in that** the spring units (34, 36) are accommodated in spaces (38, 40) which are delimited radially on the inside by a shifting sleeve bushing (17) and radially on the outside by the armature (30) and on one end face by the web (44) and on the opposite end face by a toothed wheel (19) firmly connected to the shifting sleeve bushing (17), wherein the toothed wheel (19) has the first toothing (18) and engages in the second toothing (22) provided on the first clutch body (20) in the engaged state.

10. The electromagnetic clutch according to any of claims 5 to 9, **characterized in that** the at least one spring unit (34, 36) comprises at least one wave ring or a disk spring or an assembly thereof.

11. The electromagnetic clutch according to any of claims 5 to 10, **characterized in that** at least one spring unit (34, 36) is arranged such that, when the shifting sleeve (16) is not yet coupled to the first clutch body (20), this spring unit (34, 36) is preloaded to exert a spring force on the shifting sleeve in the direction of the engaged state.

12. The electromagnetic clutch according to any of claims 5 to 11, **characterized in that** at least one spring unit (34, 36) is arranged such that, when the shifting sleeve (16) is coupled to the first clutch body (20), this spring unit (34, 36) is preloaded to exert a spring force on the shifting sleeve in the direction of the disengaged state.

13. The electromagnetic clutch according to any of the preceding claims, **characterized in that** a second clutch body (74) is provided, which is aligned coaxially with the first shaft (12) and is provided on the axial side of the shifting sleeve (16) opposite to the first clutch body (20) and can be coupled to the shifting sleeve (16) by actuating the second coil (28), wherein the toothing (76) of the second clutch body (74) and the associated toothing (82) of the shifting sleeve (16) are formed like the toothing (22) of the first clutch body (20) and the associated toothing (18) thereof, in particular **in that**, when the shifting sleeve (16) is moved into the engaged state along with the second clutch body (74), the spring units (34, 36) act on the shifting sleeve (16) before and after the engagement in the direction of the engaged state or the disengaged state.

14. A method of closing and opening an electromagnetic clutch (10) according to any of the preceding claims, comprising an armature (30) and a shifting sleeve (16) coupled thereto, which has a first toothing (18), is arranged in a rotationally fixed manner on a first shaft (12) and can be displaced linearly along the first shaft (12) between an engaged and a disengaged state, a first clutch body (20) having a second toothing (22), which is aligned coaxially with the first shaft (12), a first coil (26), which serves to displace the shifting sleeve (16) linearly along the first shaft (12) into the engaged state, and a second coil (28), which serves to displace the shifting sleeve (16) linearly along the first shaft (12) against the engaged state, comprising the following steps:
a) applying a voltage to the first coil (26) and generating a magnetic force acting on the armature (30) towards the first clutch body (20);
b) displacing the armature (30) and entraining the shifting sleeve (16) by means of the armature (30) from a disengaged state in the direction of the engaged state with the interposition of a spring unit (34, 36) between the armature (30) and the shifting sleeve (16);
c) moving the shifting sleeve (16) into the engaged state of the shifting sleeve (16) and forming a positive fit between the shifting sleeve (16) and the first clutch body (20) by means of the first and the second toothing (18, 22), the first and the second toothing (18, 22) having a first axial overlap (U₁) with respect to each other;
d) transmitting a torque between the first clutch body (20) and the first shaft (12) and displacing the shifting sleeve (16) relative to the armature (30) towards the first clutch body (20), the first and the second toothing (18, 22) having a second axial overlap (U₂) with respect to each other, which exceeds the amount of the first one;
e) canceling or reducing the transmitted torque between the first clutch body (20) and the first shaft (12) and displacing the shifting sleeve (16) relative to the armature (30) away from the first clutch body (20), the first and the second toothing (18, 22) having the first axial overlap (U₁) with respect to each other;
f) canceling or reducing the magnetic force acting on the armature (30) by the first coil (26);
g) applying a voltage to the second coil (28) and generating a magnetic force acting on the armature (30); and
h) displacing the armature (30) and entraining the shifting sleeve (16) by means of the armature (30) from an engaged state to the disengaged state.

## Revendications

1. Embrayage électromagnétique comprenant
une douille de passage de vitesses (16) qui présente une première denture (18), qui est agencée de manière solidaire en rotation sur un premier arbre (12) et qui est déplaçable linéairement le long du premier arbre (12) entre un état embrayé et un état débrayé,
un premier corps d'embrayage (20) qui présente une deuxième denture (22) et qui est aligné de manière coaxiale par rapport au premier arbre (12),
un stator (24) qui comprend une première bobine (26) qui sert à déplacer directement ou indirectement la douille de passage de vitesses (16) de manière linéaire le long du premier arbre (12),
la première et/ou la deuxième denture (18, 22) présentant, en direction de l'état embrayé, des contre-dépouilles (23, 25) qui sont réalisées de telle sorte qu'une transmission de couple entre le premier arbre (12) et le premier corps d'embrayage (20) génère une force sur la douille de passage de vitesses (16) en direction de l'état embrayé,
un engagement positif étant réalisé à l'état embrayé par la première et la deuxième denture (18, 22) entre la douille de passage de vitesses (16) et le premier corps d'embrayage (20),
un induit (30) couplé à la douille de passage de vitesses (16) étant prévu, et l'induit (30) étant déplaçable le long du premier arbre (12) par l'alimentation en courant de la première et/ou d'une deuxième bobine (28), l'induit (30) et la douille de passage de vitesses (16) étant couplés de manière à pouvoir se déplacer l'un par rapport à l'autre dans le sens axial, **caractérisé en ce qu'**un déplacement de l'induit (30) par au moins l'une des bobines (26, 28) est limité par une butée (32) prévue sur le premier corps d'embrayage (20), et **en ce que** lors d'un appui de l'induit (30) contre la butée (32) lorsque la bobine (26, 28) est alimentée en courant, une force de retenue magnétique agissant sur l'induit (30) est présente.

2. Embrayage électromagnétique selon la revendication 1, **caractérisé en ce que** la première bobine (26) sert à déplacer directement ou indirectement la douille de passage de vitesses (16) de manière linéaire le long du premier arbre (12) vers l'état embrayé, et **en ce que** le stator (24) comprend une deuxième bobine (28) qui sert à déplacer directement ou indirectement la douille de passage de vitesses (16) de manière linéaire le long du premier arbre (12) dans le sens opposé à l'état embrayé, et/ou **en ce qu'**un rappel par ressort est prévu, lequel applique une force de ressort sur la douille de passage de vitesses (16) de manière linéaire le long du premier arbre (12) dans le sens opposé à l'état embrayé.

3. Embrayage électromagnétique selon la revendication 1 ou 2, **caractérisé en ce que**, lors d'un déplacement de la douille de passage de vitesses (16) au moyen de la première bobine (26) dans l'état embrayé, un chevauchement axial (U1, U2) est présent entre la première et la deuxième denture (18, 22) et les contre-dépouilles (23, 25) déplacent la douille de passage de vitesses (16) vers l'état embrayé lors d'une transmission de couple.

4. Embrayage électromagnétique selon l'une des revendications précédentes, **caractérisé en ce que** la première et/ou la deuxième denture (18, 22) pourvue(s) de contre-dépouilles (23, 25) présente(nt) des dents (60, 62) dont les flancs de dent (64, 66) s'étendent en forme de coin, dans une vue de dessus, au moins le long d'une partie de la dent (60, 62), en particulier **en ce que** la première et la deuxième denture (18, 22) présentent des contre-dépouilles (23, 25) et les extrémités convergentes (70, 72) des parties en forme de coin (68) de la première et de la deuxième denture (18, 22) s'étendent dans des sens opposés.

5. Embrayage électromagnétique selon l'une des revendications précédentes, **caractérisé en ce que** l'induit (30) et la douille de passage de vitesses (16) sont couplés par au moins une première unité à ressort élastique (34) dans le sens axial, qui se comprime en cas de déplacement axial relatif de la douille de passage de vitesses (16) et de l'induit (30) l'une par rapport à l'autre.

6. Embrayage électromagnétique selon l'une des revendications précédentes, **caractérisé en ce qu'**au moins une unité à ressort (34, 36) est agencée de telle sorte que, lorsque la première et la deuxième denture (18, 22) sont en contact du côté frontal et la douille de passage de vitesses (16) n'est pas encore couplée au premier corps d'embrayage (20), l'unité à ressort (34, 36) précontraint la douille de passage de vitesses (16) en direction de l'état embrayé.

7. Embrayage électromagnétique selon la revendication 5 ou 6, **caractérisé en ce que** l'induit (30) présente une première surface d'appui axiale (42) et la douille de passage de vitesses (16) une deuxième surface d'appui axiale (46), et **en ce que** la première unité à ressort élastique (34) s'appuie dans le sens axial sur la première et la deuxième surface d'appui axiale (42, 46).

8. Embrayage électromagnétique selon la revendication 7, **caractérisé en ce que** l'induit (30) présente une barrette radiale (44) sur laquelle est prévue la première surface d'appui axiale (42), en particulier **en ce que** la première unité à ressort est prévue d'un côté axial de la barrette (44) et une deuxième unité à ressort (36) du côté opposé de la barrette (44), au moins l'une des unités à ressort (34, 36) exerçant une force de rappel lors d'un déplacement relatif de l'induit (30) et de la douille de passage de vitesses (16).

9. Embrayage électromagnétique selon la revendication 8, **caractérisé en ce que** les unités à ressort (34, 36) sont logées dans des espaces (38, 40) qui sont délimités radialement à l'intérieur par une gaine de douille de passage de vitesses (17) et radialement à l'extérieur par l'induit (30) ainsi que d'un côté frontal par la barrette (44) et du côté frontal opposé par une roue dentée (19) solidaire de la gaine de douille de passage de vitesses (17), la roue dentée (19) présentant la première denture (18) et s'engageant, à l'état embrayé, dans la deuxième denture (22) prévue sur le premier corps d'embrayage (20).

10. Embrayage électromagnétique selon l'une des revendications 5 à 9, **caractérisé en ce que** ladite au moins une unité à ressort (34, 36) comprend au moins une bague ondulée ou un ressort à diaphragme ou un bloc de ceux-ci.

11. Embrayage électromagnétique selon l'une des revendications 5 à 10, **caractérisé en ce qu'**au moins une unité à ressort (34, 36) est agencée de telle sorte que, lorsque la douille de passage de vitesses (16) n'est pas encore couplée au premier corps d'embrayage (20), cette unité à ressort (34, 36) est précontrainte afin d'exercer une force de ressort sur la douille de passage de vitesses en direction de l'état embrayé.

12. Embrayage électromagnétique selon l'une des revendications 5 à 11, **caractérisé en ce qu'**au moins une unité à ressort (34, 36) est agencée de telle sorte que, lorsque la douille de passage de vitesses (16) est couplée au premier corps d'embrayage (20), cette unité à ressort (34, 36) est précontrainte afin d'exercer une force de ressort sur la douille de passage de vitesses en direction de l'état débrayé.

13. Embrayage électromagnétique selon l'une des revendications précédentes, **caractérisé en ce qu'**un deuxième corps d'embrayage (74) est prévu, lequel est aligné de manière coaxiale par rapport au premier arbre (12) et est prévu du côté axial de la douille de passage de vitesses (16) opposé au premier corps d'embrayage (20) et est apte à être couplé à la douille de passage de vitesses (16) par l'actionnement de la deuxième bobine (28), la denture (76) du deuxième corps d'embrayage (74) et la denture associée (82) de la douille de passage de vitesses (16) étant réalisées de la même manière que la denture (22) du premier corps d'embrayage (20) et sa denture associée (18), en particulier **en ce que** lors du déplacement de la douille de passage de vitesses (16) dans l'état embrayé avec le deuxième corps d'embrayage (74), les unités à ressort (34, 36) agissent sur la douille de passage de vitesses (16) avant et après l'embrayage en direction de l'état embrayé ou de l'état débrayé.

14. Procédé de fermeture et d'ouverture d'un embrayage électromagnétique (10) selon l'une des revendications précédentes, comprenant un induit (30) et une douille de passage de vitesses (16) qui est couplée à celui-ci, qui présente une première denture (18), est agencée de manière solidaire en rotation sur un premier arbre (12) et est déplaçable linéairement le long du premier arbre (12) entre un état embrayé et un état débrayé, un premier corps d'embrayage (20) qui présente une deuxième denture (22) et qui est aligné de manière coaxiale par rapport au premier arbre (12), une première bobine (26) qui sert à déplacer la douille de passage de vitesses (16) linéairement le long du premier arbre (12) vers l'état embrayé, et une deuxième bobine (28) qui sert à déplacer la douille de passage de vitesses (16) linéairement le long du premier arbre (12) dans le sens opposé à l'état embrayé, comprenant les étapes suivantes :
a) l'application d'une tension à la première bobine (26) et la génération d'une force magnétique agissant sur l'induit (30) vers le premier corps d'embrayage (20),
b) le déplacement de l'induit (30) et l'entraînement de la douille de passage de vitesses (16) par l'induit (30) d'un état débrayé vers l'état embrayé, avec interposition d'une unité à ressort (34, 36) entre l'induit (30) et la douille de passage de vitesses (16),
c) le déplacement de la douille de passage de vitesses (16) vers l'état embrayé de la douille de passage de vitesses (16) et la réalisation d'un engagement positif entre la douille de passage de vitesses (16) et le premier corps d'embrayage (20) par la première et la deuxième denture (18, 22), la première et la deuxième denture (18, 22) présentant un premier chevauchement axial (U1) l'une par rapport à l'autre,
d) la transmission d'un couple entre le premier corps d'embrayage (20) et le premier arbre (12) et le déplacement de la douille de passage de vitesses (16) par rapport à l'induit (30) vers le premier corps d'embrayage (20), la première et la deuxième denture (18, 22) présentant un deuxième chevauchement axial (U2) l'une par rapport à l'autre, lequel dépasse la valeur du premier,
e) la suppression ou la réduction du couple transmis entre le premier corps d'embrayage (20) et le premier arbre (12) et le déplacement de la douille de passage de vitesses (16) par rapport à l'induit (30) en éloignement du premier corps d'embrayage (20), la première et la deuxième denture (18, 22) présentant le premier chevauchement axial (U1) l'une par rapport à l'autre,
f) la suppression ou la réduction de la force magnétique agissant sur l'induit (30) par la première bobine (26),
g) l'application d'une tension à la deuxième bobine (28) et la génération d'une force magnétique agissant sur l'induit (30), et
h) le déplacement de l'induit (30) et l'entraînement de la douille de passage de vitesses (16) par l'induit (30) d'un état embrayé vers l'état débrayé.
